# EUROPÄISCHE PATENTANMELDUNG

(11) **EP 1 106 230 A1**
(43) Veröffentlichungstag der Anmeldung: **13.06.2001**
(21) Anmeldenummer: 00122660.4
(22) Anmeldetag: 18.10.2000
(51) Int. Cl.: B01D 46/52, B01D 27/06, B01D 29/07

(54) **Herstellung einer Filterkassette mit Faltenbalg und Werkzeug mit Sägezahnprofil**

(30) Priorität: 03.12.1999 DE 19958344
(71) Anmelder: Firma Carl Freudenberg, 69469 Weinheim (DE)
(72) Erfinder: Michaelis, Udo, 64665 Albach-Hähnlein (DE)

(57) **Zusammenfassung**

Verfahren zur Herstellung einer Filterkassette mit Faltenbalg und Kunststoffrahmen, wobei der Faltenbalg (6) in ein Spritzgießwerkzeug (3) eingefügt und durch Spritzgießen mit dem Kunststoffrahmen (24) versehen wird, wobei die sich gegenüberliegenden Flächen des Werkzeugs (3) mindestens an ihren Randflächen (15) mit sägezahnartigen Profilen (1, 2; 30, 31) versehen sind, die ineinandergreifend die einzelnen Falten (22, 23; 35, 36) des Faltenbalgs (6) in einer definierten Lage zueinander halten und der Faltenbalg (6) in einem schmalen Bereich (18) seiner Stirnkanten (19) von den Profilen (1, 2; 30, 31) erfaßt und für den Spritzgießvorgang abdichtend zusammengepreßt wird.

## Beschreibung

Die Erfindung befaßt sich mit einem Verfahren zur Herstellung einer Filterkassette mit Faltenbalg und Kunststoffrahmen und einem Werkzeug zur Durchführung des Verfahrens.

Filterkassetten finden insbesondere als Gasfilter oder auch Fahrgast-Innenraumluftfilter bei Kraftfahrzeugen Verwendung. Sie sind in verschiedenen Ausführungsformen bekannt und um eine angemessene mechanische Festigkeit zu haben, sehr häufig mit einem Rahmen versehen. So ist beispielsweise durch die DE-OS 43 23 522 eine Filterkassette bekannt, bei der ein Faltenbalg aus einem zickzackförmig gefalteten Filterbahnmaterial in einen Rahmen eingesetzt ist, der aus u-förmigen Streifen gebildet ist und den Filterbalg dichtend von allen Seiten umfaßt. Die Streifen werden mit dem Filterbahnmaterial durch Schweißen verbunden. Die Herstellung einer solchen Filterkassette ist relativ aufwendig.

Eine andere Möglichkeit für die Herstellung eines Filtereinsatzes zeigt die DE-PS 40 02 078. Dort werden die Außenkanten eines Filterbalgs von kammartigen Profilen erfaßt und ein über die Profile seitlich überstehendes Material durch Andruckelemente umgelegt, aneinandergepreßt und fixiert. Ein solches Filter hat jedoch nicht immer die gewünschte Steifheit.

Durch die DE-PS 40 39 288 ist ein Filtereinsatz bekannt geworden, bei der die Randabdichtung durch einen stirnseitigen Verschluß über ein abdeckendes Dichtmaterial erreicht wird. Das Dichtmaterial kann ein Streifen sein, der auf die Stirnseiten des Faltenbalgs aufgeklebt oder aufgeschweißt ist. Das Filterbahnmaterial besteht aus einem schmelzbaren Material und seine Stirnflächen werden aufgeschmolzen und gestaucht, um dadurch eine vergrößerte Stirnfläche zu erreichen. Für den Schmelz- und Stauchvorgang wird der Faltenbalg in einer Klemmvorrichtung gehalten. Auch dieses Verfahren ist in seiner Herstellung recht umständlich.

Das deutsche Gebrauchsmuster G 88 08 632 behandelt einen Luftfiltereinsatz mit einem angegossenem Rahmen aus Kunststoff, nur einen geringen Teil des Filterkörpers erfaßt. Die Strömungsverhältnisse sind hier unklar, da die zu filternde Luft nicht vollständig durch die Filterfläche geführt wird. Außerdem gelangt der Kunststoff beim Gießvorgang in die Faltenzwischenräume und nimmt Filterfläche weg.

Es ist schließlich auch aus der DE PS 197 36 267 bekannt, einen Filtereinsatz zu bilden, der auf allen Seiten von einem angespritzten Rahmen aus Kunststoff eingefaßt ist. Auch hier besteht die Problematik, daß Kunststoff zuweit in die Faltenzwischenräume eindringen kann.

Der Erfindung liegt deshalb die Aufgabe zugrunde, ein Verfahren für die Herstellung einer Filterkassette und ein Werkzeug zur Durchführung des Verfahrens zu schaffen, welches einfach in der Durchführung ist und bei dem die Filterkassette mit dem Faltenbalg und Kunststoffrahmen aus einem Stück besteht. Die Kassette soll eine möglichst hohe Steifheit haben und preiswert in der Herstellung sein.

Die Lösung der gestellten Aufgabe wird mit den Merkmalen der Ansprüche 1 und 2 erreicht. Nach dem Verfahren gemäß der Erfindung wird in an sich bekannter Weise aus einer flächigen Bahn aus Vliesstoff, Papier oder dergleichen ein Faltenbalg gebildet. Der Faltenbalg hat etwa die Form der späteren Filterkassette. Dies kann ein Rechteck oder auch eine beliebige andere geometrische Form sein. Der vorgeformte Faltenbalg wird in ein Spritzgießwerkzeug eingefügt und durch Spritzgießen mit dem Kunststoffrahmen umspritzt. Das Spritzgießwerkzeug hat eine Rahmenform, dessen sich gegenüberliegende Flächen mit sägezahnartigen Profilen versehen sind, die beim Schließen des Werkzeugs ineinandergreifen und die einzelnen Falten des Faltenbalgs in einer definierten Lage zueinander halten. Die Profile sind an ihren Randflächen so gestaltet, daß beim Schließen des Werkzeugs der Faltenbalg in einem schmalen Bereich an seinen Stirnkanten erfaßt und für Spritzvorgang abdichtend zusammengepreßt wird. Die Stirnflächen der Profile und die Stirnkanten des Faltenbalgs werden dabei als eine Abschlußwand der Rahmenform des Spritzgießwerkzeugs benutzt.

Als Werkzeug zur Durchführung des Verfahrens wird ein Spritzgießwerkzeug eingesetzt, dessen Rahmenform mit einer Matritze und Patritze ausgestattet ist. Die Flächen des Spritzgießwerkzeugs haben sägezahnartige Profile, die ineinandergreifend die einzelnen Falten des Faltenbalgs in einer definierten Lage halten. Der vorgefertigte Faltenbalg wird bei der geöffneten Werkzeugform auf eine der Flächen aufgesetzt, wobei die Profile in die Falten eingreifen. Bei einem Schließen des Werkzeugs greifen die Profile der anderen Deckfläche in die verbliebenen Falten auf der anderen Seite des Faltenbalgs ein. Die Profile sind so ausgebildet, daß sie in einem kleinen Bereich der Stirnkanten des Faltenbalgs bei geschlossenem Werkzeug einen Abstand zueinander bilden, der ein sicheres Erfassen, Zusammenpressen und Abdichten der Stirnkanten des Faltenbalgs ergibt. Mit einem solchen Werkzeug kann der Faltenbalg im Spritzgießverfahren rundum mit einem Rahmen versehen werden, der sicher den Faltenbalg hält und eine eindeutige Abdichtung von Faltenbalg und Rahmen ergibt.

Um den Faltenbalg sicher erfassen zu können, ist es möglich, daß die Profile an ihren Enden abgesetzte Verstärkungen haben, deren Oberflächen parallel zu den Oberflächen der Leisten liegen und die den Stirnkantenbereich des Faltenbalgs erfassen und zusammenpressen. Die Breite der Leistenverstärkung wird so gewählt, daß der von der Verstärkung erfaßte Bereich der Stirnkanten des Faltenbalgs möglichst klein ist.

Eine besonders vorteilhafte Form der Profile wird dann erreicht, wenn sie an ihren Flanken mit Freistellungen versehen sind, ihre Enden jedoch von den Freistellungen nicht erfaßt werden. Diese Ausbildungsform läßt eine durchgehende Oberkante der Profile zu, wodurch jegliche Absätze in der Umgebung des Pressbereichs vermieden werden und im Bereich der Stirnkanten des Faltenbalgs werden die Stirnkanten zusammengepreßt, ohne irgendwelche scharfen Übergänge zwischen den zusammenwirkenden Enden der Profile. Diese Ausführungsform hat außerdem noch den Vorteil der besonders einfachen Fertigung, in dem die an den Flanken einzuarbeitenden Freistellungen aus im rechten Winkel zueinander stehenden Flächen gebildet werden können. Diese Geometrie der Freistellungen erlaubt die Verwendung von Standardwerkzeugen bei der Ausarbeitung der Freistellungen.

### Kurzbeschreibung der Zeichnung

Anhand von zwei in der Zeichnung dargestellten Ausführungsbeispielen wird die Erfindung näher erläutert.

Es zeigt
- Fig. 1: Die Seitenansicht eines Randabschnitts des Werkzeugprofils,
- Fig. 2:: einen Schnitt durch das Profil gemäß Linie A-A der Fig. 1,
- Fig. 3:: einen Schnitt gemäß Linie B-B in der Fig. 2,
- Fig. 4:: eine Ausführungsform mit Freistellungen an den Profilflanken,
- Fig. 5:: einen Schnitt gemäß Linie C-C der Fig. 4 und
- Fig. 6:: einen Schnitt gemäß Linie D-D in der Figur 5.

In Hinblick darauf, daß der prinzipielle Aufbau eines Werkzeugs mit sägezahnartigen Profilen bei der Herstellung von Filtereinsätzen an sich bekannt ist, was beispielsweise aus der DE PS 70 39 288 oder auch der DE PS 40 02 078 hervorgeht und auch darauf, daß die Filterkonfigurationen sehr vielfältig in ihrer geometrischen Form sein können, wird von einem an sich bekannten Stand der Technik für das Anspritzen von Rahmen in einem Spritzgießwerkzeug ausgegangen. In der Zeichnung sind deshalb lediglich die Teile des Werkzeugs dargestellt, die für die Durchführung des Verfahrens wesentlich sind.

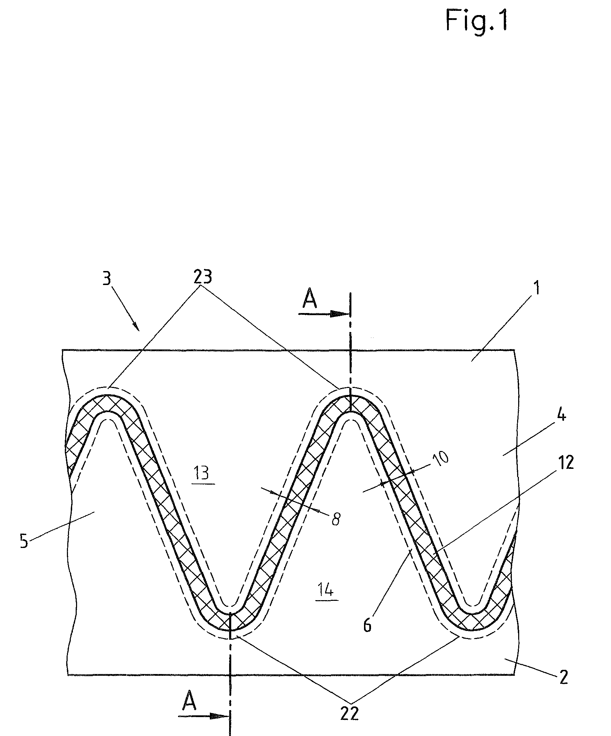

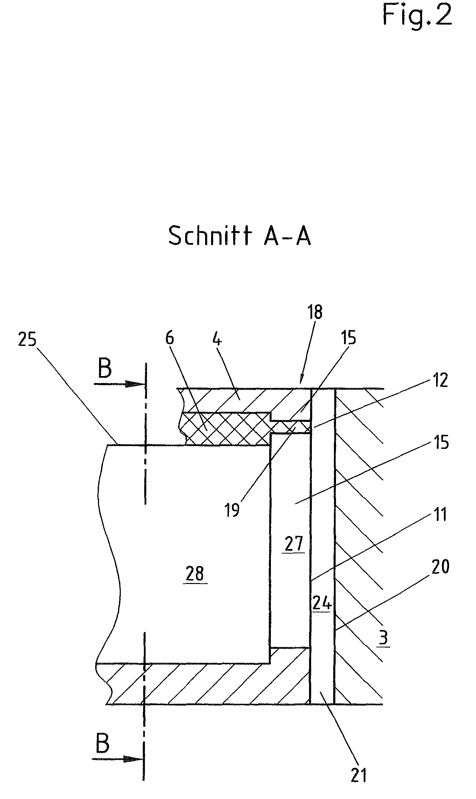

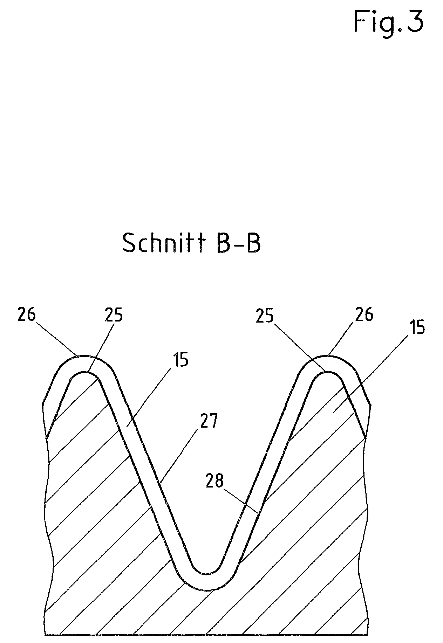

Die Figur 1 zeigt in der Seitenansicht einen Abschnitt der sägezahnartigen, ineinandergreifenden Profile 1 und 2 des Werkzeugs 3. Das nicht näher dargestellte Spritzgießwerkzeug ist auf seinen sich gegenüberliegenden Flächen mit den Profilen 1 und 2 mit den Sägezähnen 4 und 5 versehen. Die Profile 1 und 2 entsprechen der Form des Faltenbalgs 6. Der in seiner Form vorgeformte Faltenbalg 6 wird von den Profilen 1 und 2 gehalten. Die Profile 1 und 2 sind, wie auch durch die Figuren 2 und 3 deutlich wird, so ausgestaltet, daß sie im Randbereich 15 den Faltenbalg 6 nicht nur bezüglich der geometrischen Faltung in seiner Lage halten sondern ihn an den Randbereichen 15 zusammenpressen. In der Figur 1 ist der Faltenbalg 6 gestrichelt mit seinem unkomprimierten Teil 16 eingezeichnet, der die Dicke 8 hat. An seinen Rändern 15 ist der Faltenbalg 6 jedoch zusammengepreßt auf die Dicke 10. Dadurch wird der Faltenbalg 6 sicher im Werkzeug gehalten und die Seitenfläche 11 der Profile 1 und 2 zusammen mit der Stirnfläche 12 des zusammengepreßten Faltenbalgs 6 ergibt eine geschlossene Fläche für den Spritzvorgang. Die Spritzgießmasse kann nicht in die Freiräume 13, 14 zwischen den einzelnen Falten eindringen.

In der Figur 2 ist ein Schnitt gemäß der Linie A-A der Figur 1 gezeigt. Deutlich sichtbar ist der abgesetzte Rand 15 am Sägezahn 5, der seitlich über den Sägezahn 5 hinaussteht. Im oberen Teil der Figur ist die Lage des Faltenbalgs 6 zwischen den Zähnen 4 und 5 sichtbar. In dem schmalen Randbereich 18 des Faltenbalgs 6 sind seine Stirnkanten 19 von den Randflächen 15 der Profile 1 und 2 erfaßt und zusammengepreßt. Bei geschlossenem Werkzeug 3 ist zwischen der Seitenfläche 11 der Profile 1 und 2 sowie der Stirnfläche 12 des Faltenbalgs 6 und der Seitenwand 20 des Werkzeugs 3 ein Raum 21 vorhanden, der mit der Spritzgießmasse ausgefüllt den Rahmen 24 für den Faltenbalg 6 bildet.

Die Figur 3 zeigt einen Schnitt durch das sägezahnartige Profil 5 der Figur 2, gemäß der Linie B-B. Sichtbar ist der überstehende Rand 15. Bei einem Zusammenfügen der Profile 1 und 2, wie in Figur 1 gezeigt, gelangen die Profile 1 und 2 in die Zwischenräume 13, 14 der einzelnen Faltungen 22, 23 und halten dadurch die Faltungen in der gewünschten Lage. Die Ränder 15 der Profile 1, 2 stehen jedoch vor und erfassen die Stirnkanten des Faltenbalgs 6 in einem schmalen Bereich und pressen ihn dabei zusammen. In der Figur 2 ist die Lage des Faltenbalgs 6 zwischen den Profilen 1 und 2 veranschaulicht. In der Figur 3 ist der Übersichtlichkeit halber der Faltenbalg 6 weggelassen. In der Figur 2 ist auch die innen liegende Wand 20 des Spritzgießwerkzeugs 3 gezeigt. Der zwischen der von den Profilen 1 und 2 gebildeten Seitenwand 11 und der Innenwand 20 des Spritzgießwerkzeugs 3 befindliche Spalt 21 wird während des Spritzvorgangs mit der Kunststoffmasse ausgefüllt und stellt den Rahmen 24 für die Filterkassette dar.

Die Kämme 25 der Sägezähne 4 und 5 liegen unterhalb der Kammlinien 26 der Randbereiche 15. Die Oberflächen 27 der Randflächen 15 liegen parallel zu den Oberflächen 28 der Sägezähne 4 oder 5.

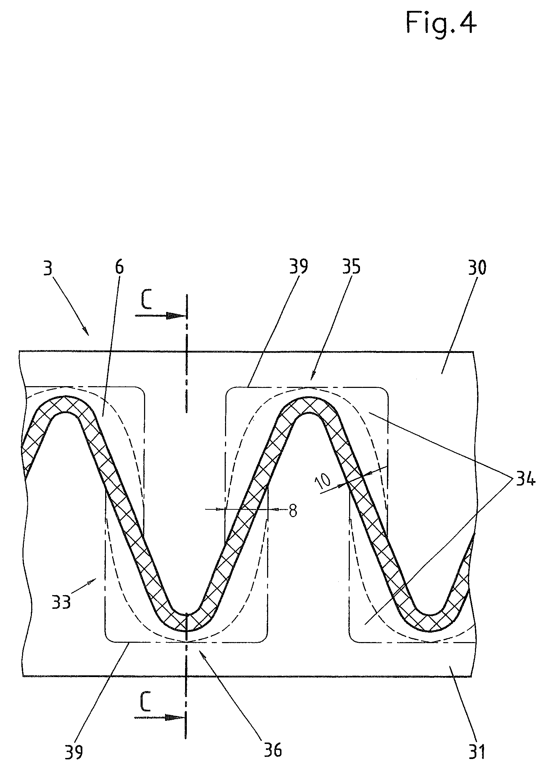

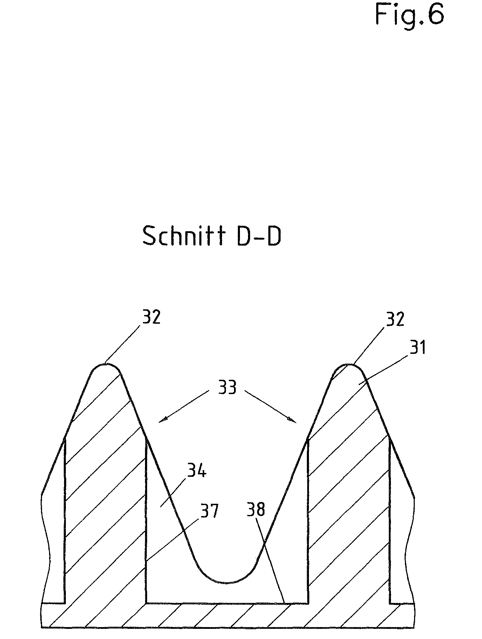

In den Figuren 4 bis 6 wird die bevorzugte Ausführungsform des Werkzeugs 3 zur Durchführung des Verfahrens gezeigt. Der prinzipielle Aufbau des Spritzgießwerkzeugs 3 aus sägezahnartigen Profilen 30, 31 ist dergleiche wie in den Figuren 1 bis 3. Jedoch wird die Erfassung des Stirnkantenbereichs 18 des Faltenbalgs 6 nicht durch hervorstehende Ränder 15 an den Sägezähnen 4 und 5 erreicht, sondern die Profile 30, 31 sind mit durchgehend gleichhohen Kämmen 32 versehen, dafür jedoch an ihren Flanken 33 mit Freistellungen 34 ausgestattet. Durch diese Art der Profile 30, 31 wird eine sichere Lage der einzelnen Falten 35, 36 des Faltenbalgs 6 zueinander sichergestellt und die Stirnkanten 19 des Faltenbalgs 6 können sicher erfaßt und zusammengepreßt werden für den Spritzgießvorgang. Die Freistellungen 34 an der Flanken 33 erlauben jedoch, daß der Faltenbalg 6 während des Zusammenfügens der Profile 30, 31 ausweichen kann und daß lediglich in einem schmalen Bereich 18 der Stirnkanten 19 der Faltenbalg 6 zusammengepreßt wird. Um das Ausweichen des Faltenbalgs 6 zu ermöglichen, sind die Flanken 33 mit einer entsprechend tiefen Freistellung 34 auszustatten. Es ist jedoch günstig, wenn die Freistellungen 34 wie in den Figur 4 und 6 gezeigt, im rechten Winkel zueinander stehenden Flächen 37, 38 haben, da dadurch der Einsatz einfacher Werkzeuge für die Bildung der Freistellungen 34 möglich ist. In der Figur 4 ist die komprimierte sichtbare Stirnfläche 12 des Faltenbalgs 6 schraffiert eingezeichnet. Der nicht komprimierte Teil des Faltenbalgs 6 ist gestrichelt angedeutet. Die Freistellungen 34 sind mit der strichpunktierten Linie 39 markiert.

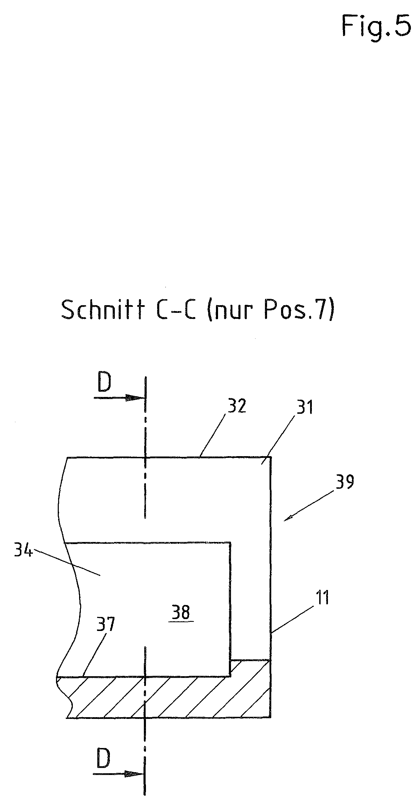

Die Figur 5 zeigt einen Schnitt gemäß der Linie C-C der Figur 4 unter Weglassung des oberen Profils 30. Es ist lediglich das untere Profil 31 dargestellt ist. Das Profil 31 hat einen gleichhohen Kamm 32und ist an seinen Flanken 33 mit der Freistellung 34 versehen, wobei ein schmaler Bereich an den Enden des Profils 31 von der Freistellung 34 nicht erfaßt ist. Dieser Bereich dient zum Zusammenpressen der Stirnkanten 19 des Faltenbalgs 6.

In der Figur 6 ist die Ausbildung des Profils 31 nochmals im Schnitt gezeigt, wobei die Form der bevorzugten Freistellung 34 sichtbar ist.

## Patentansprüche

1. Verfahren zur Herstellung einer Filterkassette mit Faltenbalg und Kunststoffrahmen, **dadurch gekennzeichnet,** daß der Faltenbalg (6) in ein Spritzgießwerkzeug (3) eingefügt und durch Spritzgießen mit dem Kunststoffrahmen (24) versehen wird, wobei die sich gegenüberliegenden Flächen des Werkzeugs (3) mindestens an ihren Randflächen (15) mit sägezahnartigen Profilen (1, 2; 30, 31) versehen sind, die ineinandergreifend die einzelnen Falten (22, 23; 35, 36) des Faltenbalgs (6) in einer definierten Lage zueinander halten und der Faltenbalg (6) in einem schmalen Bereich (18) seiner Stirnkanten (19) von den Profilen (1, 2; 30, 31) erfaßt und für den Spritzgießvorgang abdichtend zusammengepreßt wird.

2. Werkzeug zur Durchführung des Verfahrens nach Anspruch 1, gekennzeichnet durch ein Spritzgießwerkzeug (3) mit einer Rahmenform mit einer Matritze und Patritze, dessen Flächen mit sägezahnartigen Profilen (1, 2; 30, 31) versehen sind, die ineinandergreifend die einzelnen Falten (22, 23; 35, 36) des Faltenbalgs (6)in einer definierten Lage halten und die im Bereich der Stirnkanten (19) des Faltenbalgs (6) bei geschlossenem Werkzeug (3) in einem Abstand (10) zueinander stehen, der ein sicheres Erfassen, Zusammenpressen und Abdichten der Stirnkanten (19) des Faltenbalgs (6) ergibt.

3. Werkzeug nach Anspruch 2, dadurch gekennzeichnet, daß die Profile (1, 2) an ihren seitlichen Enden über die Kontur der Sägezähne (4, 5) hervorstehende Randflächen (15) haben, deren Oberflächen (27) parallel zu den Oberflächen (28) der Profile (1, 2) liegen und die den Stirnkantenbereich (18) des Faltenbalgs (6) zusammenpressen.

4. Werkzeug nach Anspruch 2, dadurch gekennzeichnet, daß die Profile (30, 31) jeweils einen gleichhohen Kamm (32) haben und an ihren Flanken (33) mit Freistellungen (34) versehen sind, wobei die seitlichen Enden (39) der Flanken (3) von den Freistellungen (34) nicht erfaßt sind.

5. Werkzeug nach Anspruch 4, dadurch gekennzeichnet, daß die Freistellungen (3, 4) im rechten Winkel zueinander stehende Flächen (37, 38) haben.
